# FASCICULE DE BREVET EUROPEEN

(11) **EP 2 422 096 B1**
(45) Date de publication et mention de la délivrance du brevet: **16.01.2013**
(21) Numéro de dépôt: 10713316.7
(22) Date de dépôt: 10.04.2010
(51) Int. Cl.: F16B 5/06, F16B 21/08

(54) **ATTACHE À AILE NERVURÉE**
BEFESTIGER MIT PROFILIERTEM FLÜGEL
FASTENER WITH PROFILED WING

(30) Priorité: 20.04.2009 FR 0952564
(43) Date de publication de la demande: 29.02.2012
(73) Titulaire: A. Raymond et Cie., 38000 Grenoble (FR)
(72) Inventeur: DE GELIS, Vincent, F-38100 Grenoble (FR); COCHARD, Mathieu, F-38120 Saint Egrève (FR)
(74) Mandataire: Rüttgers, Joachim
(86) Numéro de dépôt international: PCT/EP2010/002233
(87) Numéro de publication internationale: WO 2010/121718

(56) Documents cités:
- EP-A2- 1 895 171
- FR-A1- 2 898 164
- GB-A- 2 236 353
- US-A1- 2005 079 033
- US-B2- 6 572 317

## Description

L'invention concerne une attache munie d'un pied d'encliquetage à enfoncer à travers un orifice d'un panneau, ledit pied d'encliquetage comprenant une âme rigide plate qui s'étend selon une direction axiale et au moins une aile flexible incurvée ayant un bord longitudinal intérieur bordant l'âme qui est séparé d'un bord longitudinal extérieur libre de l'aile par un voile à face intérieure concave.

L'invention s'applique plus particulièrement à une attache pour fixer des éléments sur un panneau, par exemple pour fixer un élément de décoration, tel qu'un panneau de décoration, sur une porte de véhicule. Ainsi, l'attache est d'abord emmanchée en force, par déformation de l'aile flexible, dans une ouverture adaptée pour la recevoir et positionnée sur l'élément de décoration, puis est introduite dans un orifice (de type cylindrique par exemple) formée au sein de la porte de sorte à fixer l'élément de décoration sur la porte. A titre d'exemple, on peut retrouver une dizaine d'attaches par porte, il est donc important que le montage de l'attache sur la porte soit rapide et aisé. En même temps, l'attache doit relier fermement l'élément sur le panneau et résister à tout démontage intempestif ou arrachement.

Une attache analogue est connue du document GB-2236353. Cette attache connue comprend deux ailes flexibles définissant une forme tronconique qui contribue à faciliter l'insertion de l'attache dans un orifice. Cependant, cette attache peut facilement se démonter à cause de la flexibilité des ailes.

On connaît aussi du document US-6572317 une attache analogue dans laquelle une coupe latérale est formée sur le dessus des ailes pour empêcher à l'attache d'être facilement extraite de l'orifice dans lequel elle a été insérée.

Il est aussi connu d'augmenter l'épaisseur du voile de l'aile pour la rigidifier et donc augmenter la tenue mécanique de l'attache à l'arrachement. Toutefois, l'augmentation de l'épaisseur du voile de l'aile a aussi un effet de raidissement complet de l'aile et la déformation nécessaire au montage de l'attache dans le panneau est rendue plus difficile.

Le document FR 2898 164 montre une autre attache connue.

Le but de l'invention est de proposer une autre attache telle que définie plus haut qui est apte à se déformer suffisamment pour être insérée facilement dans un orifice de panneau mais qui offre une résistance accrue au démontage.

A cet effet, l'invention a pour objet une attache munie d'un pied d'encliquetage à enfoncer à travers un orifice d'un panneau, ledit pied d'encliquetage comprenant une âme rigide plate qui s'étend selon une direction axiale et au moins une aile flexible incurvée ayant un bord longitudinal intérieur bordant l'âme séparé d'un bord longitudinal extérieur libre de l'aile par un voile à face intérieure concave, caractérisée en ce qu'il est prévu sur la face concave du voile une nervure de rigidification qui se raccorde au bord longitudinal extérieur libre de l'aile en deux points distants sensiblement alignés selon ladite direction axiale.

Cet agencement contribue à ce que lors de l'insertion de l'attache dans un orifice, l'aile est forcée à pivoter (et donc à s'effacer) autour de la direction axiale en se pliant contre l'âme du bord, l'aile reprenant une position déployée après le passage dans l'orifice. Maintenant, si on cherche à sortir l'attache de l'orifice, la disposition de la nervure vient empêcher la déformation de l'aile en jouant un rôle d'étai, c'est-à-dire que la nervure soutient le bord supérieur de l'aile et résiste à sa déformation, ce qui renforce la tenue de l'attache à l'arrachement.

Cet agencement de la nervure contribue donc à l'obtention d'un montage facile de l'attache et un démontage difficile de l'attache sur un panneau.

Une attache selon l'invention peut présenter avantageusement les particularités suivantes:
- le bord longitudinal extérieur libre de l'aile, vu par un observateur qui regarde transversalement à l'âme, a une forme en V dont la pointe coupe un plan d'inflexion de l'aile et ladite nervure, vu par ledit observateur, a une forme en V dont la pointe coupe ledit plan d'inflexion de l'aile et qui est symétrique à la forme en V du bord longitudinal extérieur libre de l'aile, le bord longitudinal extérieur libre de l'aile formant avec la nervure une alvéole ayant une ouverture en forme de losange.
- l'âme présente un renfoncement en regard de la nervure.
- l'attache comprend deux ailes disposées de part et d'autre de l'âme de manière symétrique par rapport à la direction axiale de l'âme.
- l'âme et chaque aile munie d'une nervure sont réalisées d'un seul tenant par moulage d'une matière plastique.

La présente invention sera mieux comprise et d'autres avantages apparaîtront à la lecture de la description détaillée d'un mode de réalisation pris à titre d'exemple nullement limitatif et illustré par les dessins annexés.
La figure 1 est une vue de côté en plan d'une attache selon l'invention.
La figure 2 est une vue en coupe selon l'axe II-II de la figure 1 de l'attache selon l'invention.
La figure 3 représente l'attache selon l'invention vue de dessous.
La figure 4 est une vue partielle en perspective de l'attache selon l'invention.

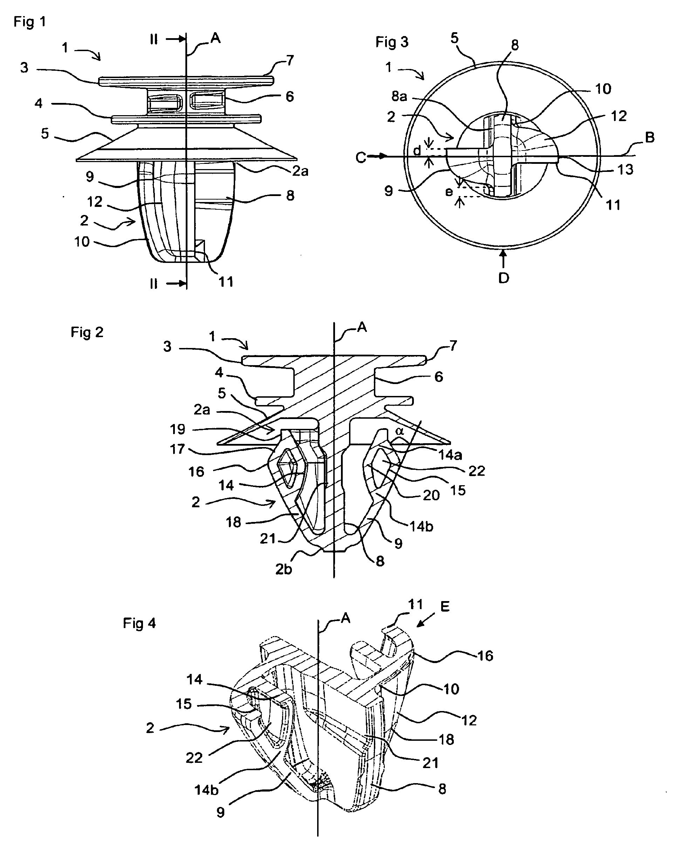

Sur la figure 1, on a représenté une attache 1 selon l'invention s'étendant selon une direction longitudinale A et comprenant un pied d'encliquetage 2, encore appelé « ancre », destiné à être enfoncé et encliqueté à travers un orifice d'un panneau non représenté et relié à une tête 3 par l'intermédiaire d'une zone de liaison 4 sur laquelle est fixé un parapluie 5 constituant une zone déformable destinée à venir s'appuyer contre le panneau comme cela est bien connu.

La tête 3 est destinée à fixer fermement un élément sur le panneau (non montré).

Elle se présente ici sous la forme d'un plot 6 circulaire surmonté d'un chapeau 7 ici en forme de disque et apte à être insérer dans une ouverture formée dans l'élément à fixer. La tête 3 peut aussi se présenter sous la forme de toute autre système de fixation, par exemple un système de fixation de type support de tubes ou de type fixation de connecteur, ou encore un dispositif pour enrubanner un faisceau de câbles.

La zone de liaison 4, aussi appelée sommet du pied d'encliquetage 2, se présente ici sous la forme d'un disque dont la périphérie a une forme variable, adaptée à l'élément à fixer, par exemple ovale, circulaire ou autre.

Le parapluie 5 se présente sous la forme d'un cône s'évasant à partir de la zone de liaison 4 en direction d'une extrémité supérieure 2a du pied d'encliquetage 2. Le parapluie 5 est flexible et s'écrase lorsqu'une force axiale est appliquée sur la tête 3, ce qui permet de monter l'attache sur des panneaux de différentes épaisseurs. Le parapluie 5 a un rôle d'étanchéité, et sert notamment de protection contre des poussières ou contre tout ruissellement.

Le pied d'encliquetage 2 comprend une âme 8 rigide plate qui s'étend selon la direction axiale A et, ici, deux ailes 9 flexibles incurvées qui s'étendent de manière symétrique par rapport à la direction axiale A de sorte que le pied 2 est sensiblement symétrique par rapport à l'axe A, ce qui permet aux forces mises en jeu pour le montage de l'attache d'être symétriques elles aussi.

Chaque aile 9 a un bord longitudinal intérieur 10 qui borde l'âme 8 et qui est séparé d'un bord longitudinal extérieur libre 11 de l'aile par un voile 12 dont la face intérieure orientée 15 vers l'âme 8 est concave. Cette face concave 15 à globalement la forme d'un quart de sphère ovale.

Sur la figure 2, on a représenté l'attache 1 en coupe longitudinale selon l'axe II-II de la figure 1. Les ailes 9 donnent au pied 2 une forme générale de deux troncs de cône reliés par leur base. Le pied a une extrémité supérieure 2a reliée à la tête 3 qui est tronquée alors que son extrémité inférieure libre 2b va en pointe. Plus précisément, l'extrémité inférieure libre 2b a ici une forme d'ogive qui permet un pré-centrage du pied 2 dans l'orifice avant insertion de l'attache 1. Cette forme en ogive de l'extrémité inférieure libre 2b peut être tronquée, comme on peut le voir sur la figure 2.

Par ailleurs, le bord longitudinal extérieur libre 11 de chaque aile 9, vu par un observateur qui regarde transversalement à l'âme 8 (comme indiqué par la flèche D sur la figure 3), a une forme en V dont la pointe est dirigée vers l'extérieur et coupe un plan d'inflexion 16 de l'aile 9 (qui correspond à la base commune des deux troncs de cône), de sorte à définir pour l'attache 1 une zone dite de retenue 17 de forme tronconique qui part de l'extrémité supérieure 2a du pied 2 en s'éloignant de l'axe A jusqu'au plan d'inflexion 16 et une zone dite d'insertion 18 qui part du plan d'inflexion 16 en se rapprochant de l'axe A jusqu'à l'extrémité inférieure 2b du pied 2.

La zone d'insertion 18 est plus étendue que la zone de retenue 17 et s'engage en premier dans l'orifice, la zone de retenue 17 servant à bloquer l'attache 1 dans l'orifice en résistant aux forces d'arrachement mises en jeu comme cela sera décrit plus bas.

Comme on peut le voir sur la figure 2, une nervure de rigidification 14 est prévue sur la face concave 15 du voile 12 de chaque aile 9. Cette nervure 14 vient se raccorder par ses deux extrémités 14a,14b au bord longitudinal extérieur 11 de l'aile 9 en deux points distants sensiblement alignés selon la direction axiale A. Plus particulièrement, l'extrémité supérieure 14a de la nervure 14 se raccorde au bord 11 au niveau de la zone de retenue 17 et l'extrémité inférieure 14b de la nervure 14 se raccorde au bord 11 au niveau de la zone d'insertion 18.

La nervure 14 joue en quelque sorte le rôle d'un étai qui s'oppose à une déformation de l'aile 9 et contribue d'une part à favoriser le rabat de l'aile 9 contre l'âme 8 lors de l'insertion de l'attache 1 dans l'orifice tout en empêchant la déformation de l'aile 9 transversalement à l'axe A si on tente d'arracher l'attache 1 de l'orifice.

On comprendra que la nervure 14 vient doubler en quelque sorte le voile 12 au niveau du bord extérieure 11 de l'aile et s'étend en profondeur parallèlement à la face plate de l'âme 8 jusqu'à se raccorder sur sa longueur à la face 15 concave du voile 12 (comme indiqué sur la figure 4).

La nervure 14 peut être rectiligne ou en arc de cercle. Mais de préférence, la nervure 14 a, vu par le même observateur qui regarde transversalement à l'âme 8 (comme indiqué par la flèche D sur la figure 3), une forme en V dont la pointe 20 est dirigée vers l'âme 8 en étant est symétrique à la forme en V de l'aile 9. Comme représenté sur la figure 2, la forme en V du bord longitudinal extérieur 11 de l'aile 9 et la forme en V de la nervure 14 pointent ici de manière opposée en étant sensiblement alignées au niveau du plan d'inflexion 16 de l'aile 9 de sorte à définir une alvéole creuse 22 ayant une ouverture en forme de losange allongé dans la direction A et dont le fond est constitué par le voile 12. Plus précisément, ce losange est plus allongé dans la zone d'insertion 18 que dans la zone de retenue 17 de l'aile 9.

La zone de retenue 17 de l'aile 9 est prolongée par une zone cylindrique ou col de centrage 19 qui s'étend dans la direction A et qui a pour but de positionner correctement l'attache 1 dans l'orifice.

Comme visible sur la figure 2, un renfoncement 21 est formé dans la face latérale plate 8a de l'âme 8 qui est du côté de la nervure 14 en forme de V de l'aile 9. Ce renfoncement 21 sert de logement à la nervure 14 quand l'aile 9 est rabattue contre l'âme 8 lors de l'insertion de l'attache 1. Bien entendu, pour une attache 1 à deux ailes 9, il est prévu un renfoncement 21 sur chaque face 8a latérale de l'âme 8.

Comme on peut mieux le voir sur la figure 3 qui représente l'attache 1 selon l'invention vue de dessous, c'est-à-dire en regardant en direction du pied d'encliquetage 2, l'aile 9 s'étend sur une zone linéaire 13 au-delà d'un axe B de symétrie de l'âme 8 qui sépare l'âme 8 en deux parties égales dans le sens de sa longueur 8a, de sorte que le bord longitudinal extérieur libre 11 dépasse l'axe B d'une distance indiquée par « d ». Grâce à la zone linéaire 13, les deux ailes 9 présentent une zone de chevauchement autour de l'axe B de sorte à améliorer le contact entre l'aile 9 et l'orifice dans lequel l'attache 1 est insérée. En outre, lors de la fabrication de l'attache 1 par moulage, la zone linéaire 13 permet de démouler facilement l'aile 9 sans imposer de contrainte sur l'attache 1.

Comme visible sur la figure 3, le bord longitudinal intérieur 10 de l'aile 9 est raccordé à la face latérale 8a de l'âme 8 à distance du bord de l'âme 8 indiquée par « e » sur la figure 3, ce qui permet à l'âme 8 de jouer un rôle de pré-guidage à l'attache 1 dans l'orifice du panneau.

Le bord longitudinal extérieur 11 de l'aile 9 a, vu par un observateur qui regarde une face 8a de l'âme 8 (comme indiqué par la flèche C sur la figure 2), est rectiligne et sensiblement perpendiculaire à l'âme 8.

La figure 4 représente le pied 2 de l'attache 1 selon l'invention coupé transversalement juste au-dessus du plan d'inflexion 16 de l'aile 9, de sorte à mieux faire apparaître l'alvéole 22.

L'épaisseur de l'aile 9 est constante sur toute l'aile 9, mis à part aux extrémités supérieure 14a et inférieure 14b de la nervure 14 où cette dernière rejoint l'aile 9 et où des rayons de liaison sont formés afin de ne pas créer de zones de ruptures sur l'aile 9.

Une attache 1 selon l'invention a généralement un diamètre compris entre environ 4 millimètres (mm) et 20 mm. L'épaisseur de l'aile 9 et celle de la nervure 14 peuvent alors varier d'environ 0,05 mm à 3 mm, en étant de préférence sensiblement similaire l'une à l'autre. Le parapluie 5 a une épaisseur inférieure par rapport à l'épaisseur de l'aile 9, comprise entre environ 0,3 et 0,8 mm. La distance « d » de laquelle le bord longitudinal extérieur libre 11 dépasse l'axe B peut varier entre environ 1 et 2 mm. La forme en ogive de l'extrémité inférieure libre 2b peut s'étendre d'environ 0,5 mm à 1 mm.

De préférence, l'âme 8, chaque aile 9 avec une nervure 14 sont réalisées d'un seul tenant par moulage d'une matière plastique et on peut aussi prévoir de réaliser l'attache 1 entièrement réalisée d'un seul tenant par moulage d'une matière plastique. On choisira par exemple pour la matière plastique un polymère thermoplastique injectable qui pourra être choisi dans la liste suivante : polyamide, polyéthylène, polyoxyméthylène, polypropylène ou tout autre polymère thermoplastique adapté.

Pour monter l'attache 1 selon l'invention dans un orifice adapté d'un panneau (non représenté), c'est-à-dire un orifice de diamètre sensiblement inférieur à la circonférence du pied 2 de l'attache 1 au niveau du plan d'inflexion 16 et sensiblement égal à la circonférence du pied 2 au niveau du col de centrage 19, il suffit d'exercer une pression sur la tête 3 de l'attache 1 dans la direction axiale A. Cette pression axiale appuie sur la zone d'insertion 18 qui force l'aile 9 à se rabattre ou se replier vers l'âme 8 en pivotant autour du bord longitudinal intérieur 10 de l'aile 9 qui joue donc un rôle de charnière pour l'aile 9. La nervure 14 de l'aile 9 rigidifie l'aile 9 et empêche alors toute déformation de l'aile 9 dans une direction radiale E sensiblement perpendiculaire à la direction A indiquée sur la figure 4. En particulier, l'angle α formé par la zone de retenue 17 par rapport à la zone d'insertion 18 reste constant. Pendant cette pression, la nervure 14 peut se loger dans le renfoncement 21 de l'âme 8.

Une fois insérée, l'attache 1 est bloquée dans le panneau de manière connue entre le parapluie 5 et le col de centrage 19.

Il est alors difficile de démonter l'attache 1, puisque si on tire sur la tête 3 de l'attache 1 dans la direction A dans le sens opposé au sens d'insertion, la nervure 14 s'oppose encore à la déformation de l'aile 9 vers l'âme 8 dans la direction radiale E. La pression axiale s'appuie cette fois sur la zone de retenue 17 de l'aile 9 qui, étant plus courte que la zone d'insertion 18, transmet moins de force à l'aile 9 pour pivoter autour du bord longitudinal intérieur 10 de l'aile 9.

On comprendra que la forme de la nervure 14 en V est adaptée pour empêcher un démontage intempestif ou involontaire de l'attache 1, tout en permettant néanmoins, si l'on applique sur la tête 3 de l'attache 1 une certaine force minimale, un possible démontage de l'attache 1 sans casser l'attache 1.

Il va de soi que la présente invention ne saurait être limitée à la description qui précède d'un mode de réalisation, susceptible de subir quelques modifications sans pour autant sortir du cadre de l'invention, comme définie par les revendications. Par exemple, l'attache 1 peut être destinée à s'insérer dans un orifice oblong. Dans ce cas, l'âme 8 peut être scindée en deux parties créant ainsi deux montants latéraux espacés d'une certaine distance et sur chacun desquels est fixée une aile 9 nervurée comme décrit ci-dessus.

## Revendications

1. Attache (1) munie d'un pied d'encliquetage (2) à enfoncer à travers un orifice d'un panneau, ledit pied d'encliquetage (2) comprenant une âme (8) rigide plate qui s'étend selon une direction axiale (A) et au moins une aile (9) flexible incurvée ayant un bord longitudinal intérieur (10) bordant l'âme (8) séparé d'un bord longitudinal extérieur libre (11) de l'aile (9) par un voile (12) à face intérieure concave, **caractérisée en ce qu'**il est prévu sur la face intérieure concave du voile une nervure (14) de rigidification qui se raccorde au bord longitudinal extérieur (11) de l'aile (9) en deux points distants sensiblement alignés selon ladite direction axiale (A).

2. Attache selon la revendication 1, dans laquelle le bord longitudinal extérieur libre (11) de l'aile (9), vu par un observateur qui regarde transversalement (D) à l'âme (8), a une forme en V dont la pointe coupe un plan d'inflexion (16) de l'aile (9) et dans laquelle ladite nervure (14), vu par ledit observateur, a une forme en V dont la pointe (20) coupe ledit plan d'inflexion (16) de l'aile (9) et qui est symétrique à la forme en V du bord longitudinal extérieur libre (11) de l'aile (9), le bord longitudinal extérieur libre (11) de l'aile (9) formant avec la nervure (14) une alvéole ayant une ouverture en forme de losange.

3. Attache selon la revendication 1 ou 2, dans laquelle l'âme (8) présente un renfoncement (21) en regard de la nervure (14).

4. Attache selon l'une des revendications 1 à 3, **caractérisée en ce qu'**elle comprend deux ailes (9) disposées de part et d'autre de l'âme (8) de manière symétrique par rapport à la direction axiale (A) de l'âme (8).

5. Attache selon l'une des revendications 1 à 4, **caractérisée en ce que** l'âme (8), et chaque aile (9) munie d'une nervure (14) sont réalisées d'un seul tenant par moulage d'une matière plastique.

## Claims

1. A fastener (1) provided with a locking foot (2) adapted to be pushed through an orifice in a panel, said locking foot (2) comprising a flat rigid core (8) which extends in an axial direction (A) and at least one curved flexible wing (9) having an interior longitudinal edge (10) bordering the core (8) and separated from a free exterior longitudinal edge (11) of the wing (9) by a web (12) which has a concave interior face, **characterised in that** there is provided on the concave interior face of the web a stiffening rib (14) which is connected to the exterior longitudinal edge (11) of the wing (9) at two spaced points substantially aligned in said axial direction (A).

2. A fastener according to claim 1, wherein the free exterior longitudinal edge (11) of the wing (9), as seen by an observer looking in a direction (D) transverse to the core (8), has a V-shape the apex whereof intersects a plane of inflection (16) of the wing (9) and wherein said rib (14), as seen by said observer, has a V-shape the apex (20) whereof intersects said plane (16) of inflection of the wing (9) and which is symmetrical with the V-shape of the free exterior longitudinal edge (11) of the wing (9), the free exterior longitudinal edge (11) of the wing (9) forming with the rib (14) a cavity having a lozenge-shaped opening.

3. A fastener according to claim 1 or claim 2, wherein the core (8) includes a recess (21) facing the rib (14).

4. A fastener according to any one of claims 1 to 3, **characterised in that** it comprises two wings (9) arranged on respective opposite sides of the core (8) and symmetrically with respect to the axial direction (A) of the core (8).

5. A fastener according to any one of claims 1 to 4, **characterized in that** the core (8) and each wing (9) provided with a rib (14) are produced in one piece by moulding a plastic material.

## Patentansprüche

1. Befestigungsteil (1) mit einem Einrastfuß (2) zum Einbringen in eine Öffnung einer Platte, wobei der Einrastfuß (2) einen steifen flachen Kern (8), der sich in einer axialen Richtung (A) erstreckt, und wenigstens einen flexiblen gekrümmten Flügel (9) aufweist, der über einen den Kern (8) begrenzenden inneren Längsrand (10) verfügt, der von einem freien äußeren Längsrand (11) des Flügels (9) durch eine Abdeckung (12) mit einer konkaven Innenfläche getrennt ist, **dadurch gekennzeichnet, dass** auf der konkaven Innenfläche der Abdeckung eine Versteifungsrippe (14) vorgesehen ist, die mit dem äußeren Längsrand (11) des Flügels (9) an zwei beabstandeten Punkten verbunden ist, die entlang der axialen Richtung (A) fluchten.

2. Befestigungsteil nach Anspruch 1, bei dem der freie äußere Längsrand (11) des Flügels (9), wie er von einem quer (D) zu dem Kern (8) blickenden Betrachter gesehen ist, eine V-artige Gestalt aufweist, deren Spitze eine Biegungsebene (16) des Flügels (9) schneidet und bei dem die sich im Blickfeld des Betrachters befindliche Rippe (14) eine V-artige Gestalt aufweist, deren Spitze (20) die Biegungsebene (16) des Flügels (9) schneidet und die symmetrisch zu der V-artige Gestalt des freien äußeren Längsrands (11) des Flügels (9) ist, wobei der freie äußere Längsrand (11) des Flügels (9) mit der Rippe (14) eine Zelle mit einer rautenförmigen Öffnung bildet.

3. Befestigungsteil nach Anspruch 1 oder 2, bei dem der Kern (8) in Bezug auf die Rippe (14) eine Vertiefung (21) aufweist.

4. Befestigungsteil nach einem der Ansprüche 1 bis 3, **dadurch gekennzeichnet, dass** es zwei Flügel (9) aufweist, die symmetrisch in Bezug auf die axiale Richtung (A) des Kerns (8) beidseitig des Kerns (8) angeordnet sind.

5. Befestigungsteil nach einem der Ansprüche 1 bis 4, **dadurch gekennzeichnet, dass** der Kern (8) und jeder mit einer Rippe (14) ausgestattete Flügel (9) einstückig durch Formen aus einem Kunststoffmaterial hergestellt sind.
